# EUROPEAN PATENT SPECIFICATION

(11) **EP 2 063 141 B1**
(45) Date of publication and mention of the grant of the patent: **11.06.2014**
(21) Application number: 08020297.1
(22) Date of filing: 21.11.2008
(51) Int. Cl.: F16D 13/54, F16D 25/02, F16D 13/04, F16D 43/12

(54) **Vehicle with friction clutch**
Fahrzeug mit Reibungskupplung
Véhicule avec embrayage à friction

(30) Priority: 21.11.2007 JP 2007301716; 10.10.2008 JP 2008264597
(43) Date of publication of application: 27.05.2009
(73) Proprietor: Yamaha Hatsudoki Kabushiki Kaisha, Shizuoka-ken Shizuoka 438-8501 (JP)
(72) Inventor: Inomori, Toshinori c/o Yamaha Hatsudoki K.K., Shizuoka-ken 438-8501 (JP); Ishida, Yousuke c/o Yamaha Hatsudoki K.K., Shizuoka-ken 438-8501 (JP)
(74) Representative: Grünecker, Kinkeldey, Stockmair & Schwanhäusser

(56) References cited:
- JP-A- 8 232 981
- JP-A- 52 004 955
- US-A1- 2004 238 315
- US-B1- 6 957 730

## Description

The present invention relates to a vehicle, in particular a straddle-type vehicle such as a motorcycle, having a friction clutch.

Conventionally, a vehicle which has a friction clutch for engaging/disengaging transmission of engine drive force and a clutch operator for operating a friction clutch has been well known. As an example of a clutch operator, there is a clutch lever of a motorcycle.

Generally, as the size of a vehicle is larger, the capacity of a friction clutch is larger, and force necessary for disengaging a friction clutch is also larger. This increases a load of a clutch operation. In order to reduce a load of a clutch operation, a technique for attaching a so-called power-assisting device to a friction clutch is suggested in Japanese Patent Application Laid-Open Publication No. 52-004955 or Japanese Patent No. 3381442.

A friction clutch having a power assisting device disclosed in Japanese Patent No. 3381442 including a counter shaft (=rotation shaft), a clutch release hub (=driven side rotator) provided on an outer circumference of the rotation shaft, a cylindrical clutch housing (=drive side rotator) which forms a contour of the clutch and has a bottom, a clutch disc (=first plate) attached to the drive side rotator, a clutch plate (=second plate) which is attached to the driven side rotator and is alternately disposed with the first plate, a clutch pressure disc (=pressure plate) which presses the first plate and the second plate into contact with each other, an elastic member which urges the pressure plate in a direction in which the first plate and the second plate are pressed into contact with each other, a first clutch push piece (=operating shaft) of a rod shape and a second clutch push piece of a substantially cylindrical shape which move the pressure plate in an axial direction of the rotation shaft, a clutch operation system which moves the operating shaft in an axial direction of the rotation shaft, a sub clutch including a sub clutch drive disc (=pressing member) which rotates together with the drive side rotator to move in an axial direction of the rotation shaft, a sub clutch driven disc (=torque transmission member) attached to one end of the operating shaft, and a friction member (friction plate) disposed between the pressing member and the torque transmission member in an axial direction of the rotation shaft. The friction clutch includes a shift mechanism (=power assisting device) which moves the pressure plate in a reverse direction of the predetermined direction by using torque of the sub clutch.

The pressure plate is pressed into contact with an outer circumference of the second clutch push piece. The pressing member is pressed into contact with an inner circumference of the second clutch push piece. Therefore, the pressure plate, the second clutch push piece and the pressing member can rotate together with the drive side rotator. In addition, the pressure plate, the second clutch push piece and the pressing member can rotate in an axial direction of the rotation shaft together.

By using the friction clutch, the pressure plate, the second clutch push piece and the pressing member can rotate together with the drive side rotator. Therefore, force necessary for disengaging the clutch in the clutch operation system is only force which moves the pressing member in an axial direction of the rotation shaft until the pressing member comes into contact with the friction plate. When the pressing member comes into contact with the friction plate, the pressure plate receives rotation from the pressing member to move in a direction for disengaging the clutch. As described above, the friction clutch can reduce force necessary for disengaging the clutch.

In the friction clutch having the power assisting device disclosed in Japanese Patent No. 3381442, however, rotation of the drive side rotator is transmitted to the pressing member in the sub clutch through the pressure plate and the second clutch push piece. That is, the second clutch push piece is interposed between the pressure plate and the sub clutch. Therefore, an extra transmission path intervenes before rotation of the drive side rotator is transmitted to the sub clutch. In addition, the second clutch push piece has a substantially cylindrical shape. That is, the second clutch push piece is a member having a relatively large axial direction size. Therefore, in constituting a transmission path between the pressure plate and the sub clutch, the shapes of the pressure plate and the pressing member are complicated, whereby the structure of the clutch is complicated. The present invention has been devised in consideration of the above-mentioned points.

It is an objective of the present invention to provide a vehicle with a friction clutch whose structure can be simplified and an operational load necessary for disengaging the clutch can be decreased.

According to the present invention, said objective is solved by a vehicle, in particular straddle-type vehicle such as a motorcycle, comprising an engine with a crankshaft and a friction clutch, comprising: a drive side rotator having a first plate and being rotatable by means of rotation of the crankshaft of the engine; a driven side rotator having a second plate opposite to the first plate in a predetermined direction and being rotatable upon receiving rotation of the drive side rotator; a pressure plate which is engaged to the drive side rotator, is movable in an axial direction with respect to the drive side rotator, is rotatable together with the drive side rotator, and is movable in a predetermined direction to contact the first plate and the second plate with each other; a power assisting mechanism configured to receive torque of the pressure plate and to convert the torque into force for moving the pressure plate in a direction for separating the first plate and the second plate from each other when the pressure plate moves in a direction opposite to the predetermined direction; and a sub clutch having a friction plate which is rotatable together with the pressure plate, the sub clutch being configured to receive torque of the pressure plate and to transmit the torque to the power assisting mechanism when the friction clutch is disengaged.

Accordingly, the friction clutch includes the power assisting mechanism. The power assisting mechanism receives torque of the pressure plate and converts the torque into force for moving the pressure plate in a direction in which the first plate and the second plate are separated from each other when a clutch is disengaged. That is, due to the power assisting mechanism, force necessary for moving the pressure plate in a direction in which the first plate and the second plate are separated from each other is decreased.

Further, in the friction clutch, the friction plate is provided to rotate together with the pressure plate. The pressure plate is engaged to the drive side rotator, is movable in an axial direction with respect to the drive side rotator, and is rotatable together with the drive side rotator. The drive side rotator rotates by means of rotation of a crankshaft of an engine.

As described above, a friction clutch can be provided whose structure can be simplified and an operational load necessary for disengaging the clutch can be decreased.

Preferably, rotation of the crankshaft of the engine is transmittable to the friction plate only through the drive side rotator and the pressure plate.

As rotation of the crankshaft of the engine is transmitted to the friction plate only through the drive side rotator and the pressure plate, in the friction clutch shapes of the pressure plate and the friction plate can be simplified when a transmission path is constituted between the pressure plate and the sub clutch.

Preferably, the sub clutch is arranged in axial direction of a rotation shaft of the friction clutch between the driven side rotator and the power assisting mechanism.

Further, preferably an elastic member is configured to urge the pressure plate in the predetermined direction.

Still further, preferably the friction plate of the sub clutch has a first friction surface formed at one side in axial direction of the drive side rotator and a second friction surface provided at the other side.

According to a preferred embodiment, a pressing member is configured to come into contact with the first friction surface to press the friction plate from the one side toward the other side when the pressure plate moves in a direction opposite to the predetermined direction, and/or a torque transmission member is located opposite to the second friction surface of the friction plate and is configured to be pressed into contact with the friction plate pressed by the pressing member to receive torque of the pressure plate and to transmit the torque to the power assisting mechanism when a friction clutch is disengaged.

Preferably, an operating shaft is configured to move the pressing member from one side to the other side, and, preferably, a clutch operating mechanism is configured to operate the operating shaft to move the pressing member from one side to the other side.

Further, preferably a slide arm is formed in the pressure plate, and, preferably, the friction plate is slidably engaged with a portion of the slide arm.

Still further, preferably the rotation shaft is supported or connected to the driven side rotator and is rotatable together with the driven side rotator.

According to another preferred embodiment, a hole extending in axial direction is formed in the rotation shaft, the operating shaft being preferably at least partially inserted into the hole of the rotation shaft, and, preferably, an oil supplying path configured to supply oil to the sub clutch is formed inside the operating shaft.

Preferably, the power assisting mechanism comprises a ball cam.

Further, preferably the drive side rotator includes a plurality of first plates, the driven side rotator includes a plurality of second plates, and the plurality of first plates and the plurality of second plates are alternately disposed in the predetermined direction.

Still further, preferably the friction clutch comprises a centrifugal clutch configured to engage and disengage according to a rotation speed of the engine.

In the following, the present invention is explained in greater detail by means of embodiments thereof in conjunction with the accompanying drawings, wherein:
- Fig. 1: is a side view of a motorcycle;
- Fig. 2: is a diagram of main components of a power unit;
- Fig. 3: is a cross-sectional view of a clutch according to a first embodiment;
- Fig. 4: is a cross-sectional view of a driving mechanism;
- Fig. 5: is a view illustrating a power assisting mechanism according to the first embodiment, and (a) is a back view of a second cam plate, (b) is a surface view of a ball plate, and (c) is a surface view of a first cam plate;
- Fig. 6: is a cross-sectional view of a clutch according to a second embodiment;
- Fig. 7: is a view illustrating a power assisting mechanism according to the second embodiment, and (a) is a back view of a second cam plate, (b) is a surface view of a ball disposed between a first cam plate and the second cam plate, and (c) is a surface view of the first cam plate; and
- Fig. 8: is a view illustrating a pressure plate and a friction plate according to the second embodiment, and (a) is a front view of the pressure plate and (b) is a front view of the friction plate.

Among others, the following reference signs are used in the figures:
- 1: motorcycle (vehicle)
- 2: clutch (friction clutch)
- 33: main shaft (rotation shaft)
- 33a: through hole (hole)
- 41: roller weight (centrifugal weight)
- 43a: short push rod (operating shaft)
- 46: clutch housing (drive side rotator)
- 48: clutch boss (driven side rotator)
- 64: friction plate (first plate)
- 65: clutch plate (second plate)
- 70: abutment member
- 77: pressure plate
- 81: cam face
- 83: disc spring (elastic member)
- 100: sub clutch
- 101: friction plate
- 101 a: first friction surface
- 101 b: second friction surface
- 102: first pressing plate (pressing member)
- 103: second pressing plate (torque transmission member)
- 110: oil supplying path
- 200: power assisting mechanism
- 220: power assisting mechanism

Hereinafter, a motorcycle 1 having a friction clutch according to a first embodiment will be described in detail with reference to drawings. Here, a motorcycle 1 and a clutch 2 which will be described below are merely ones according to preferred embodiments. A vehicle according to the present teaching is not limited to a motorcycle 1. A vehicle according to the present teaching is not limited to a motorcycle, a moped, and a scooter, but may include other vehicles such as an all terrain vehicle (ATV). In addition, in this specification, a motorcycle is referred to as a vehicle of a type which inclines body thereof when taking a turn. A motorcycle is not limited to a two-wheeled vehicle but may include three or more wheels. Accordingly, the present teaching relates to a vehicle such as a straddle-type vehicle having a body frame and a seat on which a rider can be seated straddling the body frame when being seated.

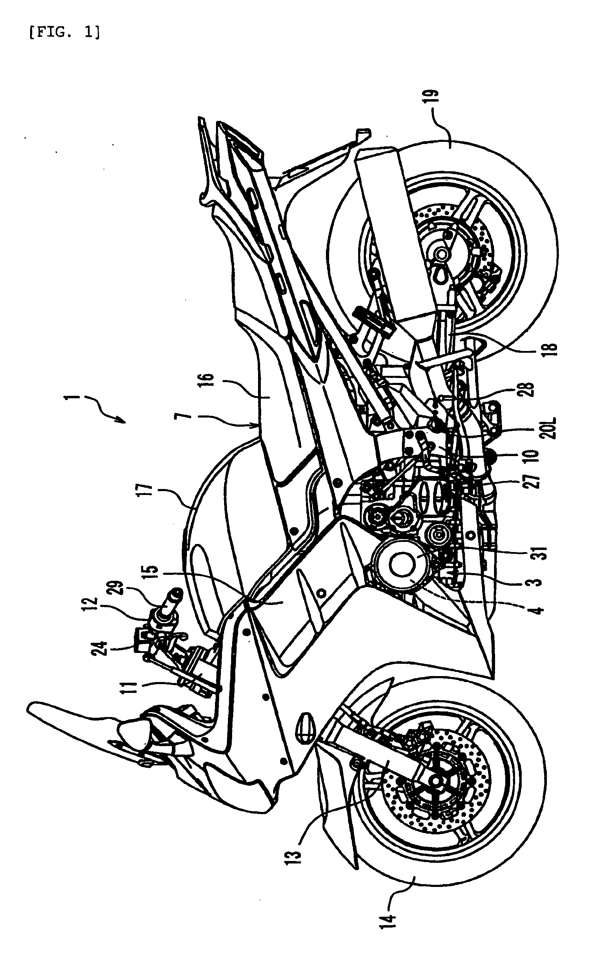

Fig. 1 is a left side view illustrating a motorcycle 1 according to the first embodiment. In the description below, front, back, left and right directions are referred to as directions seen from a position of a driver who sits on a seat 16 which will be described later.

As shown in Fig. 1, the motorcycle 1 includes a vehicle body 7, a front wheel 14 provided at a front side of the vehicle body 7, and a rear wheel 19 provided at a rear side of the vehicle body 7.

The vehicle body 7 includes a vehicle body frame 10. The vehicle body frame 10 includes a head pipe 11. A handle 12 is attached to an upper end of the head pipe 11. Meanwhile, the front wheel 14 is rotatably attached to a lower end of the head pipe 11 through a front fork 13.

A power unit 3 is suspended to the vehicle body frame 10. A vehicle body cover 15 is attached to the vehicle body frame 10. Based on a front-rear direction, a seat 16 is disposed at a back side from an almost center of the vehicle body 7. A fuel tank 17 is disposed in front of the seat 16.

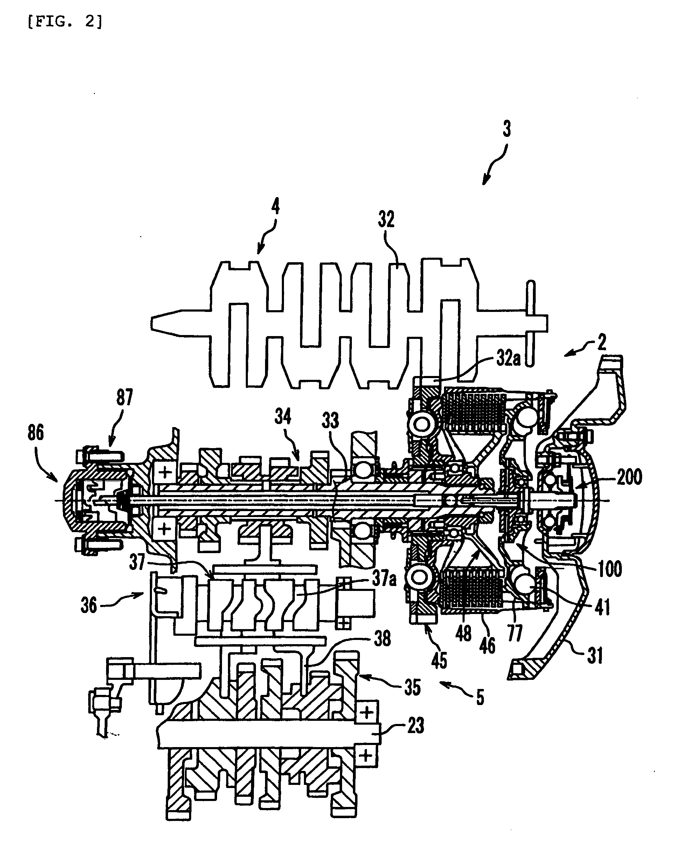

A rear arm 18 is pivotally supported to the vehicle body frame 10. The rear wheel 19 is rotatably attached to a rear end of the rear arm 18. The rear wheel 19 is connected to an engine 4 (see Fig. 2) through a power transmission mechanism which is not shown in the drawing. Drive force of the engine 4 is thereby transmitted to the rear wheel 19 so that the rear wheel 19 rotates.

An accelerator grip which is not shown in the drawing is provided at the right side of the handle 12. A left grip 29 is provided at the left side of the handle 12. A clutch lever 24 operated to engage/disengage a clutch 2 (see Fig. 2) which will be described later is provided in front of the left grip 29 of the handle 12.

Footrests 20L are provided in a central part of in a front-rear direction at both right and left sides of the vehicle body 7. A shift pedal 27 operated to change a transmission gear ratio of a transmission 5 (see Fig. 2) which will be described later is provided at the left side of the vehicle body 7 and slightly before the left footrest 20L. A side stand 28 is provided at the left side of the vehicle body 7 and below the shift pedal 27 and the footrest 20L.

Next, configurations of main components of a power unit 3 will be described with reference to Fig. 2. As shown in Fig. 2, the power unit 3 includes the engine 4, the transmission 5, and the clutch 2. The engine 4 is not limited to a certain type of an engine, and in the embodiment, a water-cooled four-cycle parallel four-cylinder engine is used as the engine 4.

Although not shown, the engine 4 includes four cylinders, pistons each of which reciprocates in each cylinder, and a crankshaft 32 connected to the piston through a connecting rod. The crankshaft 32 extends in a vehicle width direction. A reference numeral 31 denotes a crankcase.

As shown in Fig. 2, the crankshaft 32 is connected to the transmission 5 through the clutch 2. The transmission 5 includes a main shaft 33, a drive shaft 23, and a gear selection mechanism 36. The main shaft 33 is connected to the crankshaft 32 through the clutch 2. The main shaft 33 and the drive shaft 23 are disposed parallel to the crankshaft 32, respectively.

A multi-stage transmission gear 34 is mounted on the main shaft (rotation shaft) 33. Meanwhile, a plurality of transmission gears 35 corresponding to the multi-stage transmission gear 34 is mounted on the drive shaft 23. The multi-stage transmission gear 34 and the plurality of transmission gears 35 are disposed so that only one pair of gears selected are engaged with each other. Either or both of the transmission gear 34 of the multi-stage transmission gear 34 excluding the selected transmission gear 34 and the transmission gear 35 of a plurality of transmission gears 35 excluding the selected transmission gear 35 are rotatable with respect to the main shaft 33 or the drive shaft 23. That is, at least one of the non-selected transmission gear 34 and the non-selected transmission gear 35 runs idle with respect to the main shaft or the drive shaft 23. That is, the rotation between the main shaft 33 and the drive shaft 23 is transmitted only by the selected transmission gear 34 and the selected transmission gear 35 which are engaged with each other.

The transmission gears 34 and 35 are selected by the gear selection mechanism 36. In detail, the transmission gears 34 and 35 are selected by a shift cam 37 of the gear selection mechanism 36. A plurality of cam grooves 37a are formed on an outer circumferential surface of the shift cam 37. A shift fork 38 is mounted on each cam groove 37a. The shift forks 38 are engaged with predetermined transmission gears 34 and 35 of the main shaft 33 and the drive shaft 23, respectively. As the shift cam 37 rotates, a plurality of shift forks 38 are guided into the cam grooves 37a respectively to move in an axial direction of the main shaft 33, so that gears which are engaged with each other are selected from the transmission gears 34 and 35. In detail, among the multi-stage transmission gear 34 and the plurality of transmission gears 35, only one pair of gears located corresponding to a rotation angle of the shift cam 37 are fixed with respect to the main shaft 38 and the drive shaft 23 by a spline. As a result, a location of the transmission gear is determined, and a rotation between the main shaft 33 and the drive shaft 23 is transmitted at a predetermined transmission gear ratio through the transmission gears 34 and 35. The gear selection mechanism 36 is operated by the shift pedal 27 shown in Fig. 1.

In the above-mentioned configuration, after a pair of transmission gears 34 and 35 are fixed to the main shaft 33 and the drive shaft 23 and the clutch 2 is engaged, when the engine 4 is driven, drive force of the engine 4 is transmitted to the main shaft 33 through the clutch 2. The rotation is transmitted at a predetermined transmission gear ratio between the main shaft 33 and the drive shaft 23 through a pair of transmission gears 34 and 35, so that the drive shaft 23 is driven to rotate. When rotation of the drive shaft 23 is driven to rotate, drive force is transmitted by a transmission mechanism (not shown) such as a chain connecting the drive shaft 23 and the rear wheel 19, so that the rear wheel 19 is rotated. In the embodiment, a power transmission mechanism which connects the engine 4 and the rear wheel 19 is configured by a transmission mechanism (not shown) such as the clutch 2, the transmission 5 and the chain

In the embodiment, the clutch 2 is configured by a friction clutch of a wet multi-plate type. The clutch 2 is a centrifugal clutch which is automatically engaged/disengaged in starting or stopping a motorcycle and also a clutch which is engaged/disengaged by the clutch lever 24 operated by a rider. A configuration of the clutch 2 will be described below with reference to Figs. 2, 3 and 4.

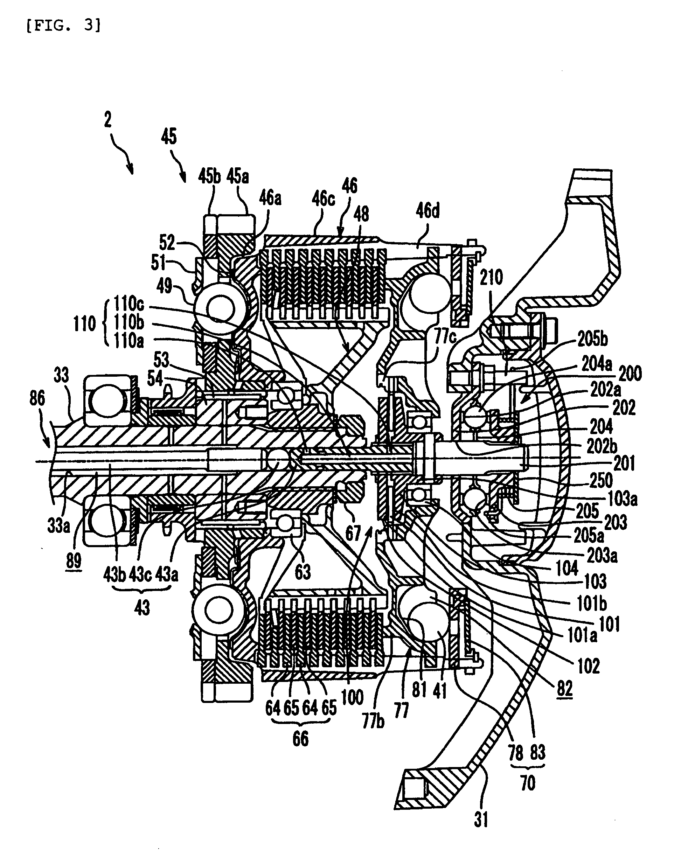

As shown in Fig. 3, the clutch 2 includes a clutch housing (drive side rotator) 46. The main shaft 33 passes through the clutch housing 46. The clutch housing 46 includes a housing body 46c. The housing body 46c is formed in a substantially cylindrical form whose one end is closed by a bottom 46a. The main shaft 33 is inserted through the bottom 46a of the housing body 46c. A plurality of pairs of arms 46d are provided in the housing body 46c. Each arm 46d extends toward the outside with regard to a vehicle width direction from the bottom 46a.

As shown in Fig. 3, a vehicle width direction is referred to as a left-right direction. In the embodiment, the clutch 2 is disposed at the right side of the main shaft 33, and the outside of the vehicle width direction is the right side, and the inside of the vehicle width direction is the left side. Therefore, the outside and the inside of the vehicle width direction are referred to as simply the right side and the left side.

The scissors gear 45 is attached to the clutch housing 46. The scissors gear 45 includes two gears 45a and 45b, a spring 49, and two plates 51 and 52. The gear 45a and the gear 45b are located between the two plates 51 and 52. The two plates 51 and 52 are fixed to each other by a fixture such as a rivet or a screw with respect to an axial direction of the main shaft 33. Therefore, the two gears 45a and 45b are substantially fixed to each other with respect to an axial direction of the main shaft 33. Meanwhile, the gears 45a and 45b are rotatable with respect to a rotational direction.

The gears 45a and 45b have the same number of teeth. The gears 45a and 45b are disposed so that their teeth respectively are located alternately to each other with respect to a circumferential direction. The spring 49 is provided between the gear 45a and the gear 45b. Therefore, torsional torque is applied to the gear 45a and 45b by the spring 49. Therefore, fluctuation torque of the engine 4 is absorbed.

The gear 45a of the scissors gear 45 is engaged with a gear 32a (see Fig. 2) of the crankshaft 32. The gear 45a of the scissors gear 45 is fixed to the bottom 46a of the clutch housing 46 so as to be unrotatable relative thereto. Due to such a configuration, as the crankshaft 32 rotates, the gear 45a of the scissors gear 45 and the clutch housing 46 rotate integrally.

A needle bearing 53 and a spacer 54 fixed unrotatably with respect to the main shaft 33 are disposed between the scissors gear 45 and the main shaft 33. The needle bearing 53 makes the scissor gear 45 rotatable with respect to the main shaft 33. That is, rotation of the scissors gear 45 is not transmitted directly to the main shaft 33.

A clutch boss (driven side rotator) 48 is fixed by a nut 67 so as to be unrotatable with respect to the main shaft 33. That is, the clutch boss 48 rotates together with the main shaft 33. A slide bearing 63 is disposed between the clutch boss 48 and the scissors gear 45. Therefore, a distance between each of the scissors gear 45, the needle bearing 53 and the spacer 54 and the clutch boss 48 is restricted by the slide bearing 63 not to be within a predetermined distance. That is, movement of the scissors gear 45, the needle bearing 53 and the spacer 54 toward the clutch boss 48 in an axial direction of the main shaft 33 is restricted.

A plurality of friction plates (first plates) 64 are disposed inside the clutch housing 46. Each friction plate 64 is fixed to the clutch housing 46 with respect to a rotational direction of the main shaft 33. A plurality of friction plates 64 rotate together with the clutch housing 46. Each friction plate 64 can be displaced with respect to an axial direction of the main shaft 33. Therefore, a distance between the adjacent friction plates 64 is variable.

A plurality of friction plates 64 is disposed in an axial direction of the main shaft 33. A clutch plate (second plate) 65 is disposed between the adjacent friction plates 64. The clutch plate 65 is opposite to the adjacent friction plate 64. Each of the clutch plates 65 is fixed to the clutch boss 48 with respect to a rotational direction of the main shaft 33. Therefore, a plurality of clutch plates 65 rotate together with the clutch boss 48. In addition, each clutch plate 65 can be displaced with respect to an axial direction of the main shaft 33. Therefore, a distance between the adjacent clutch plates 65 is variable.

In the embodiment, a plate group 66 is comprised of the plurality of friction plates 64 and the plurality of clutch plates 65.

A pressure plate 77 is disposed at the right side of the main shaft 33. The pressure plate 77 has a disc-like shape. A sub clutch 100 which will be described later is provided around a central part of the pressure plate 77. An outer end in a radial direction of the pressure plate 77 is engaged with the arm 46d. Therefore, the pressure plate 77 is unrotatable with respect to the clutch housing 46 and rotates together with the clutch housing 46.

A pressing portion 77b which protrudes toward the plate group 66 is formed on an outer portion in a radial direction of the pressure plate 77. The pressing portion 77b is opposite to the friction plate 64 at the most right side of the plate group 66. As the pressure plate 77 moves to the left, the pressing portion 77b presses the plate group 66 to the left. As a result, the friction plate 64 of the plate group 66 and the clutch plate 65 are pressed into contact with each other.

A cam face 81 which supports a roller weight (centrifugal weight) 41 is formed on a surface of the outer portion in a radial direction of the pressure plate 77 which is opposite to the plate group 66. A plurality of cam faces 81 and a plurality of roller weights 41 are provided along a circumferential direction. A plurality of cam faces 81 are radially disposed around an axial center of the main shaft 33. Each cam face 81 is inclined to face right as it moves outward in a radial direction.

A roller retainer 78 is disposed at the right side of the pressure plate 77. The roller retainer 78 is formed in a shape of orbicular zone viewed in the axial direction of the main shaft 33. The roller retainer 78 is opposite to the cam face 81 of the pressure plate 77. Therefore, a space 82 whose width narrows outward in a radial direction of the main shaft 33 is formed by each cam face 81 and the roller retainer 78.

An outer end in a radial direction of the roller retainer 78 is engaged with a plurality of arms 46d like the pressure plate 77. Therefore, the roller retainer 78 is unable to rotate with respect to the clutch housing 46. That is, the roller retainer 78 rotates together with the clutch housing 46. Meanwhile, the roller retainer 78 can be displaced with respect to the clutch housing 46 in an axial direction of the main shaft 33.

The roller retainer 78 is urged to the left by a disc spring (elastic member) 83 as an urging member. That is, the roller retainer 78 is urged toward the plate group 66 by the disc spring 83. The roller retainer 78 and the disc spring 83 configure an abutment member 70 which presses the roller weight 41 toward the cam face 81.

The roller weights 41 are disposed in a plurality of spaces 82, respectively. The roller weight 41 pivots as the clutch housing 46 rotates, and moves on the cam face 81 outward in a radial direction by centrifugal force generated when it pivots. When the centrifugal force is equal to or more than a predetermined value, the roller weight 41 receives repulsive force from the abutment member 70 to press the pressure plate 77 toward the plate group 66.

In a case where a rotation speed of the crankshaft 32 is lower than a predetermined value, such as an idling state, a rotation speed of the clutch housing 46 also becomes lower. Therefore, centrifugal force applied to the roller weight 41 is relatively small, and so the roller weight 41 is located in the relatively inside portion. Therefore, force which the roller weight 41 presses the pressure plate 77 to the left becomes substantially zero. As a result, the plate group 66 enters a substantially non-contact state where it is not pressed from the pressure plate 77. Therefore, rotation of the clutch housing 46 is not transmitted to the clutch boss 48. That is, the clutch 2 enters a disengaged state.

Meanwhile, as a rotation speed of the crankshaft 32 becomes relatively higher, a rotation speed of the clutch housing 46 also becomes relatively higher. Therefore, as a rotation speed of the clutch housing 46 increases, centrifugal force applied to the roller weight 41 increases. If centrifugal force applied to the roller weight 41 is equal to or more than a predetermined value, the roller weight 41 moves outward. The pressure plate 77 is thereby pressed toward the left side by the roller weight 41 and thus moves toward the plate group 66. As a result, the plate group 66 is pressed into contact with each other, and the clutch 2 enters an engaged state.

When the plate group 66 is pressed into contact with each other and the clutch 2 is engaged as described above, rotation of the clutch housing 46 is transmitted to the clutch boss 48 through the clutch group 66. Therefore, the clutch boss 48 rotates together with the clutch housing 46.

Meanwhile, in a state that the clutch 2 is engaged, if a rotation speed of the crankshaft 32 is lower, centrifugal force applied to the roller weight 41 is smaller. Therefore, the roller weight 41 moves inward in a radial direction. As a result, force that the pressure plate 77 presses the plate group 66 becomes substantially zero, whereby the clutch 2 is disengaged.

As described above, in the motorcycle 1, the centrifugal clutch 2 is provided. Therefore, when it starts or stops, the clutch 2 is automatically engaged/disengaged according to a rotation speed of the engine 4, and so it is unnecessary to operate the clutch lever 24. Therefore, in the motorcycle 1 according to the first embodiment, a rider's operational load in staring or stopping the motorcycle can be reduced.

As shown in Fig. 3, the clutch 2 according to the present embodiment includes a sub clutch 100. The sub clutch 100 includes a friction plate 101, a first pressing plate (pressing member) 102 opposite to a left surface (hereinafter, first friction surface) 101 a of the friction plate 101, and a second pressing plate (torque transmission member) 103 opposite to a right surface (hereinafter, second friction surface) 101 b of the friction plate 101.

The friction plate 101 is engaged with the pressure plate 77 to rotate together with the pressure plate 77. In detail, a slide arm 77c is formed in the pressure plate 77. Meanwhile, a groove (not shown) is formed in outer portion in a radial direction of the friction plate 101. The groove of the friction plate 101 is slidably engaged with the slide arm 77c, and the friction plate 101 is configured to rotate together with the pressure plate 77.

The first pressing plate 102 is fixed to a short push rod (operating shaft) 43a which will be described later. Therefore, the first pressing plate 102 freely moves together with the short push rod 43a in an axial direction. In addition, the first pressing plate 102 rotates together with the short push rod 43a.

The short push rod 43a is serration-fitted into the second pressing plate 103. Therefore, the second pressing plate 103 rotates together with the short push rod 43a, but can move in an axial direction relative to the short push rod 43a. The second pressing plate 103 has a boss 103a which extends in a right direction. The boss 103a rotatably supports the pressure plate 77 through a bearing 104. Therefore, the second pressing plate 103 and the pressure plate 77 are configured to enable a relative rotation. In addition, the second pressing plate 103 and the pressure plate 77 are configured so that they move integrally in an axial direction

When the short push rod 43a moves to the right, the first pressing plate 102 also moves to the right. The first pressing plate 102 presses the friction plate 101 toward the second pressing plate 103. As a result, the friction plate 101 is fitted between the first pressing plate 102 and the second pressing plate 103. Therefore, torque of the pressure plate 77 is transmitted and applied to the first pressing plate 102 and the second pressing plate 103 through the friction plate 101.

As described later, a through hole (hole) 33a is formed inside the main shaft 33. The short push rod 43a, a ball 43c, and a long push rod 43b of a push mechanism 43 are inserted into the through hole 33a. A gap 89 between an inner sidewall of the through hole 33a and the long push rod 43b functions as an oil supply path for supplying the clutch 2 with oil.

An oil supply path 110 which guides oil in the gap 89 to the sub clutch 100 is formed in the short push rod 43a. The oil supply path 110 includes an oil introducing path 110a formed in the left portion of the short push rod 43a, an oil passage 110b formed in a central portion of the short push rod 43a, and an oil discharge path 110c formed in a right portion of the short push rod 43a. The oil introducing path 110a is a hole which extends in a radial direction and is connected to the oil passage 110b which extends in an axial direction. Similarly, the oil discharge path 110c is a hole which extends in a radial direction and is connected to the oil passage 110b. An outlet of the oil discharge path 110c, i.e., an opening of a radial direction outer portion of the oil discharge path 110c, is opened toward the first friction surface 101 a and the second friction surface 101b of the friction plate 101. Therefore, oil in the oil supply path 110 is supplied toward the first friction surface 101a and the second friction surface 101b.

As shown in Fig. 3, the clutch 2 according to the present embodiment includes a power-assisting mechanism 200. The power-assisting mechanism 200 converts part of torque of the pressure plate 77 into force which disengages the clutch 2 and decreases force necessary for disengaging the clutch 2. The power-assisting mechanism 200 according to the present embodiment is configured by a so-called ball cam. The power-assisting mechanism 200 includes a slide shaft 201 fixed to the second pressing plate 103, a first cam plate 202, a second cam plate 203, a ball plate 204, and a coil spring 205 which urges the second cam plate 203 in a direction which separates the second cam plate 203 from the first cam plate 202. A supporting plate 250 which supports the coil spring 205 by coming into contact with the right portion of the coil spring 204 is fixed to a distal end of the slide shaft 201.

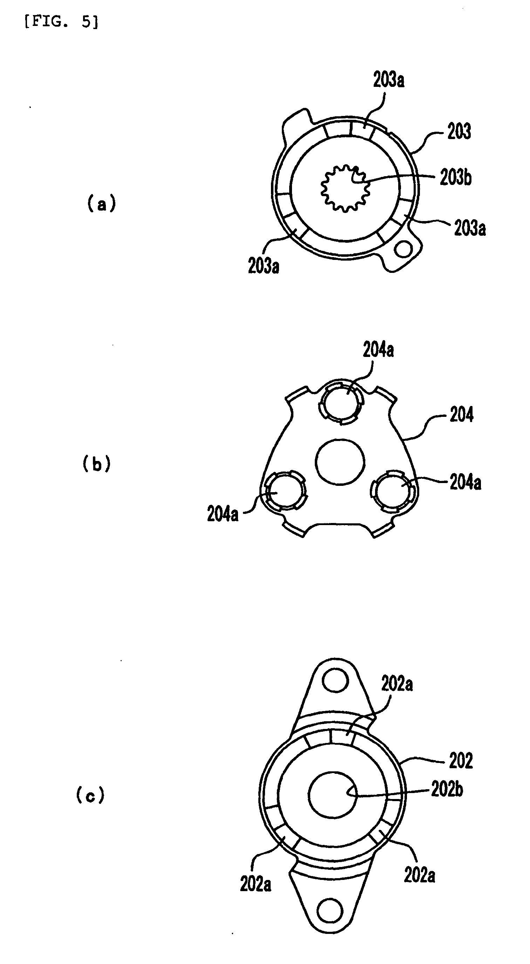

As shown in Fig. 5(b), three balls 204a are rollably supported by the ball plate 204. The three balls 204a are equally disposed along a circumferential direction around an axial center of the slide shaft 201. Here, the number of balls 204a supported by the ball plate 204 is not limited to three.

As shown in Fig. 5(c), a through hole 202b is formed in a center of the first cam plate 202. As shown in Fig. 3, the slide shaft 201 is inserted through the through hole 202b.

The slide shaft 201 freely moves in an axial direction and freely rotates with respect to the first cam plate 202. That is, the first cam plate 202 is configured not to rotate even though the slide shaft 201 rotates.

As shown in Fig. 5(a), a serration hole 203b is formed in a center of the second cam plate 203. The slide shaft 201 is serration-fitted into the second cam plate 203. Therefore, the second cam plate 203 freely moves in an axial direction with respect to the slide shaft 201 but rotates together with the slide shaft 201.

One end 205a of the coil spring 205 is latched onto the second cam plate 203. The other end 205b of the coil spring 205 is latched onto a pin 210 fixed to a crankcase 31. Therefore, the second cam plate 203 receives torque which rotates around the slide shaft 201 from the coil spring 205. The second cam plate 203 receives slide force which moves the second cam plate 203 toward the first cam plate 202 in an axial direction of the slide shaft 201 from urging force of both the disc spring 83 and the coil spring 205.

A first cam face 202a is formed on a right surface (a front surface in Fig. 5(c)) of the first cam plate 202. A second cam face 203a is formed on a left surface (a front surface in Fig. 5(a)) of the second cam plate 203. The first cam face 202a and the second cam face 203a are formed so that a ball 204a moves up from between both cam faces 202a and 203a when the second cam plate 203 rotates in a predetermined direction, and the ball 204a is received between both cam faces 202a and 203a when the second cam plate 203 rotates in a reverse direction of the predetermined direction. In other words, when the second cam plate 203 rotates in a predetermined direction against total urging force of the disc spring 83 and the coil spring 205, both cam faces 202a and 203a are pressed by the ball 204a to be separated from each other, so that the second cam plate 203 moves to the right. In addition, when the second cam plate 203 rotates in a reverse direction, both cam faces 202a and 203a move to the left due to total urging force of the disc spring 83 and the coil spring 205.

A clutch release mechanism (clutch operating mechanism) 86 is provided in the clutch 2 according to the first embodiment. The clutch release mechanism 86 releases a pressed-contact state of the plate group when a rider of the motorcycle 1 operates the clutch lever 24. Thanks to the clutch release mechanism 86, the clutch 2 can be disengaged by a manual operation of a rider of the motorcycle 1.

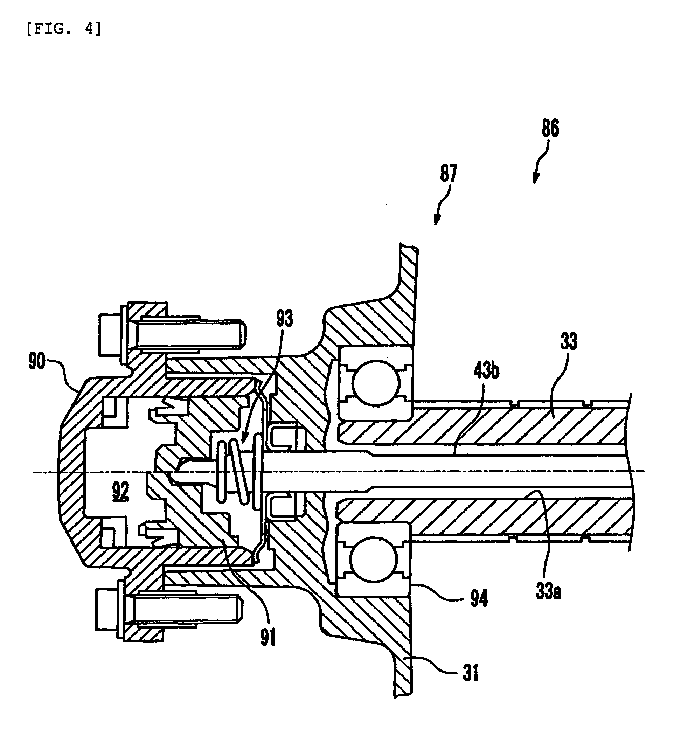

The clutch release mechanism 86 includes a push mechanism 43 (see Fig. 3) and a driving mechanism 87 (see Fig. 4) which drives the push mechanism 43. As shown in Fig. 3, the push mechanism 43 includes a short push rod 43a, a long push rod 43b and a ball 43c interposed between the short push rod 43a and the long push rod 43b. The through hole 33a is formed inside the main shaft 33, and the push mechanism 43 is disposed in the through hole 33a. The through hole 33a also functions as an oil supplying hole through which oil is supplied to the respective sliding portions of the clutch 2. In detail, oil is supplied to the respective sliding portions of the clutch 2 through the gap 89 between the inner sidewall of the through hole 33a and the push mechanism 43.

A right end of the short push rod 43a protrudes from the main shaft 33 and is attached to the first pressing plate 102 of the sub clutch 100. Therefore, when the sub clutch 100 is connected, the short push rod 43a rotates integrally with the pressure plate 77. In addition, when the sub clutch 100 and the clutch 2 are connected, the short push rod 43a rotates together with the clutch housing 46. Meanwhile, the long push rod 43b does not rotate together with the main shaft 33. Therefore, the ball 43c is provided between the short push rod 43a and the long push rod 43b, so that sliding resistance between the short push rod 43a and the long push rod 43b is reduced.

Fig. 4 is a cross-sectional view illustrating the driving mechanism 87. As shown in Fig. 4, a left end of the long push rod 43b is positioned at a left side of a left end of the main shaft 33 to thereby extend to the driving mechanism 87. A portion of Fig. 4 below an axial center of the main shaft 33 shows a state that the clutch release mechanism 86 is not driven. In other words, a portion of Fig. 4 below an axial center of the main shaft 33 shows a state that the push mechanism 43 is located at the relatively left side, and the pressure plate 77 is not displaced to the right by the push mechanism 43. Meanwhile, a portion of Fig. 4 above an axial center of the main shaft 33 shows a state the clutch release mechanism is driven. That is, a portion of Fig. 4 above an axial center of the main shaft 33 shows a state that the push mechanism 43 is located at the relatively right, and the pressure plate 77 is displaced to the right by the push mechanism 43.

As shown in Fig. 4, the driving mechanism 87 includes a cylinder 90 and a piston 91. The piston 91 slidably moves with respect to the cylinder 90 in an axial direction of the main shaft 33. The piston 91 is attached to the long push rod 43b. Therefore, as the piston 91 slides, the long push rod 43b also moves in an axial direction of the main shaft 33.

An operating chamber 92 is formed between the piston 91 and the cylinder 90. The operating chamber 92 is filled with oil.

A helical compression spring 93 is disposed between the piston 91 and the crankcase 31. The piston 91 is urged to the left by the helical compression spring 93. That is, the push mechanism 43 is displaced to be urged in a direction that the clutch 2 is engaged. Therefore, when an operation of the clutch lever 24 (see Fig. 1) is released by a rider of the motorcycle 1, the push mechanism 43 automatically moves to the left.

Next, an operation of the clutch 2 will be described. An operation for disengaging the clutch 2 will be first described.

If a rider of the motorcycle 1 grips the clutch lever 24 (see Fig. 1), internal pressure of the operating chamber 92 of the driving mechanism 87 increases. The piston 91 thereby moves to the right, and the long push rod 43b also moves to the right. The ball 43c and the short push rod 43a also move to the right, and the first pressing plate 102 of the sub clutch 100 moves to the right. The friction plate 101 of the sub clutch 100 is thereby fitted between the first pressing plate 102 and the second pressing plate 103, so that the sub clutch 100 enters an engaged state. As a result, the slide shaft 201 of the power-assisting mechanism 200 rotates together with the pressure plate 77 in a predetermined direction.

If the slide shaft 201 rotates in a predetermined direction, the second cam plate 203 of the power-assisting mechanism 200 rotates in the same direction. The ball 204a of the ball plate 204 moves up from between the first cam face 202a and the second cam face 203a, and the second cam plate 203 is pressed to the right by the ball 204a. Therefore, the slide shaft 201 is also pressed to the right. As a result, the pressure plate 77 moves to the right due to force that the short push rod 43a pushes the pressure plate 77 to the right through the first pressing plate 102 and the friction plate 101 and force that the slide shaft 201 pulls the pressure plate 77 to the right through the second pressing plate 103 and the bearing 104. Accordingly, a pressed-contact state of the plate group 66 is released, so that the clutch is disengaged.

The second cam plate 203 is restricted not to rotate by equal to more than a predetermined amount. Therefore, in a state that the clutch 2 is disengaged, the friction plate 101 rotates with respect to the first pressing plate 102 and the second pressing contact 103. That is, the friction plate 101 slides with respect to the first pressing plate 102 and the second pressing contact 103. However, since oil is supplied to the first friction surface 101a and the second friction surface 101b of the friction plate 101, abrasion of the friction plate 101 is suppressed.

Next, an operation for engaging the clutch 2 will be first described.

In order to engage the clutch 2, a rider releases the clutch lever 24 he or she grips. Then, internal pressure of the operating chamber 92 of the driving mechanism 87 decreases. The piston 91 and the long push rod 43b thereby move to the left. Then, the ball 43c and the short push rod 43a also move to the left, and the first pressing plate 102 of the sub clutch 100 moves to the left. The first pressing plate 102 of the sub clutch 100 is thereby separated from the friction plate 101. In addition, the second pressing plate 103 becomes hard to be pushed to the right by the first pressing plate 102. Therefore, rightward pressing force with respect to the slide shaft 201 disappears, and the second cam plate 203 which receives urging force of the coil spring 205 rotates in a reverse direction, so that the second cam plate 203 and the slide shaft 201 move to the left. As a result, the second pressing plate 103 also moves to the left.

In addition, the pressure plate 77 moves to the left by urging force of the disc spring 83 and the like because rightward pressing force by the first pressing plate 102 is released. As a result, the plate group 66 is pressed into contact with each other by the pressure plate 77, so that the clutch 2 is engaged. At this time, the friction plate 101 of the sub clutch 100 is separated from the second pressing plate 103.

In the clutch 2 according to the first embodiment, urging force which the pressure plate 77 receives from the disc spring 83 changes depending on a radial direction position of the roller weight 41. In detail, if a rotation speed of the pressure plate 77 is high, the roller weight 41 moves outward in a radial direction. As a result, the roller weight 41 moves to the right to greatly transform the disc spring 83. Therefore, urging force which the pressure plate 77 receives from the disc spring 83 relatively increases because the disc spring 83 is greatly transformed by the roller weight 41 without increasing an elastic coefficient of the disc spring 83 itself. Meanwhile, if a rotation speed of the pressure plate 77 is low, the roller weight 41 moves inward in a radial direction. As a result, the roller weight 41 moves to the left, the transformation of the disc spring 83 decreases. Therefore, so urging force which the pressure plate 77 receives from the disc spring 83 becomes relatively smaller.

If an engine speed is high, the pressure plate 77 needs to press the plate group 66 into contact with each other with large pressing force. In the clutch 2 according to the first embodiment, as an engine speed is higher, the roller weight 41 moves outward in a radial direction, and so the transformation of the disc spring 83 increases. Therefore, sufficient pressing force can be obtained without increasing an elastic coefficient of the disc spring 83 is not greatly increased. Therefore, the elastic coefficient of the disc spring 83, that is, the spring capacity, can be suppressed relatively small.

However, when rotating at a low speed such as an idling state, the roller weight 41 moves inward in a radial direction, and so it enters a state which the pressure plate 77 does not press the plate group 66 into contact with each other. That is, it enters a disengaged state. If an engine speed increases in an idling state, the roller weight 41 moves outward in a radial direction, and so it enters a state which the pressure plate 77 presses the plate group 66 into contact with each other. That is, it enters an engaged state. However, in the clutch 2 according to the first embodiment, since the elastic coefficient of the disc spring 83 is relatively small, an engine speed is not very high at the moment when the clutch is engaged and the transformation of the disc spring 83 is relatively small, force that the pressure plate 77 presses the plate group 66 into contact with each other is also relatively small. Therefore, the plate group 66 is not abruptly pressed into contact with each other, and the clutch 2 is smoothly engaged.

As described above, according to the first embodiment, the clutch 2 includes a power-assisting mechanism 200 and so can reduce force necessary for disengaging the clutch 2. The clutch 2 also includes a roller weight 41 which moves outward in a radial direction by the movement amount according to the magnitude of centrifugal force and presses the pressure plate 77 toward the plate group 66 with force according to the movement amount. Therefore, if an engine speed is high, the roller weight 41 moves outward in a radial direction, so that force that the pressure plate 77 presses the plate group 66 into contact with each other can be made relatively large. Therefore, even though an engine speed is high, slipping in the plate group 66 can be prevented, and power transmission efficiency of the clutch 2 can be improved. Meanwhile, if an engine speed is low, the roller weight 41 moves inward in a radial direction, so that force that the pressure plate 77 presses the plate group 66 into contact with each other can be kept relatively small. Therefore, a shock occurring when the clutch 2 is engaged in an idling state can be reduced. Therefore, the clutch 2 according to the present embodiment can reduce not only an operational load for disengaging the clutch can be reduced but also a shock occurring when the clutch 2 is engaged in an idling state.

According to the first embodiment, the pressure plate 77 is supported to or connected to the clutch housing 46 to rotate according to the clutch housing 46. The cam face 81 which guides the roller weight 41 rightward as it moves more outward in a radial direction is formed on a right surface of the pressure plate 77. The clutch 2 includes an abutment member 70 which is disposed at a location opposite to the cam face 81 of the pressure plate 77 through the roller weight 41. The abutment member 70 applies repulsive force which goes to the cam face 81 to the roller weight 41 when the roller weight 41 abuts on it.

The pressure plate 77 has a function which presses the plate group 66 into contact with each other and a function which supports and guides the roller weight 41. Therefore, there is no need for separately providing a member for pressing the plate group 66 into contact with each other and a member for supporting and guiding the roller weight 41. Accordingly, according to the first embodiment, the number of components of the clutch 2 can be decreased, and it is possible to make the clutch 2 compact.

In addition, according to the first embodiment, the clutch 2 includes a sub clutch 100. The sub clutch 100 includes the friction plate 101 provided to rotate together with the pressure plate 77, the first pressing plate 102 which comes into contact with the first friction surface 101 a of the friction plate 101 when the clutch is disengaged to press the pressure plate 101 to the right, and the second pressing plate 103 which comes into contact with the second friction surface 101 b of the friction plate 101 when the clutch is disengaged and is pressed into contact with the pressure plate 101 to receive torque from the pressure plate and transmits the torque to the power-assisting mechanism 200.

As described above, the pressure plate 101 includes the two friction surfaces 101 a and 101 b. Therefore, torque can be efficiently transmitted to the power-assisting mechanism 200 from the pressure plate 77.

In the first embodiment, the sub clutch 100 is disposed between the clutch boss 48 and the abutment member 70, respectively between the clutch boss 48 and the power assisting mechanism 200, with respect to an axial direction of the main shaft 33. That is, a space between the clutch boss 48 and the abutment member 70 is effectively used as an installation space for the sub clutch 100. Therefore, it is possible to make the clutch 2 compact.

Further, the clutch 2 according to the present embodiment includes a main shaft 33 supported to or connected to the clutch boss 48 to rotate according to the clutch boss 48, and the through hole 33a which extends in an axial direction is formed inside the main shaft 33. The clutch 2 also includes a push mechanism 43, and the push mechanism 43 includes a short push rod 43a that at least part thereof is inserted into the through hole 33a to push the first pressing plate 102 to the right when the clutch is disengaged. The oil supplying path 110 which supplies oil to the sub clutch 100 is formed inside the short push rod 43a.

As described above, according to the first embodiment, oil can be supplied directly to the sub clutch 100 through the oil supplying path 110. That is, not only oil dispersed in the crankcase 31 is supplied to the sub clutch 100, but also oil can be actively supplied to the sub clutch 100 through the oil supplying path 110. Therefore, since the sufficient amount of oil can be supplied to the sub clutch 100, abrasion of the sub clutch 100 can be suppressed.

In the clutch 2 according to the first embodiment, the power-assisting mechanism 200 is configured by a ball cam. Therefore, the power-assisting mechanism 200 can be reduced in size. The power-assisting mechanism 200 is not limited to a ball cam but may be one with other configurations can be employed.

The clutch 2 according to the present embodiment is a multi-plate type clutch that a plurality of friction plates 64 and a plurality of clutch plates 65 are alternately disposed. However, the clutch 2 may be a single-plate type clutch which includes a single friction plate and a single clutch plate or a friction clutch of another type which transmits drive force with frictional force. however, a multi-plate type clutch is typically larger in clutch capacity than a single-plate type clutch. In other words, drive force transmitted through the clutch is larger. Therefore, the above-described effects of reducing both an operational load in disengaging the clutch and a shock occurring when the clutch 2 is engaged in an idling state are remarkably obtained.

In the modification of the first embodiment, the pressure plate 77 enters a state where it does not press the plate group 66 into contact with each other, or a disengaged state, at a low speed such as an idling state. However, by adjusting urging force of the disc spring 83 and the coil spring 205, even at a low speed rotation such as an idling state, the pressure plate 77 presses the plate group 66 into contact with each other to be able to enter a so-called partially applied clutch state.

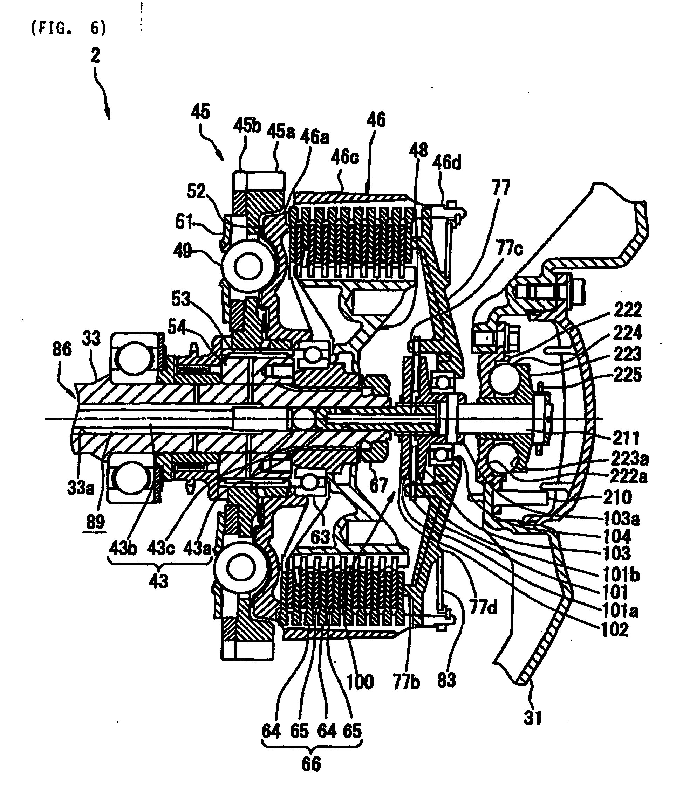

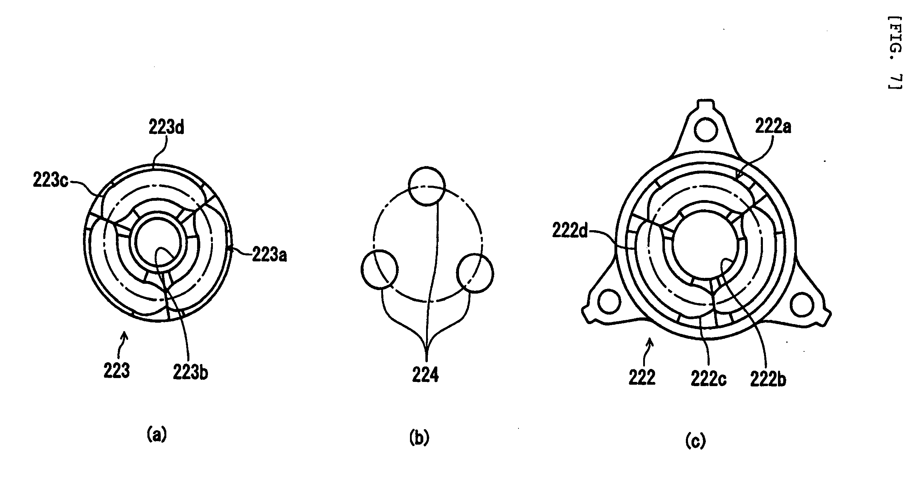

The clutch 2 according to the present embodiment is configured by a wet multi-plate type friction clutch. The clutch 2 according to the present embodiment is a clutch engaged/disengaged by a clutch lever 24 operated by a rider. However, the clutch 2 according to the present embodiment does not include the weight roller 41 unlike the first embodiment. A configuration of the clutch 2 according to the present embodiment will be described below in detail with reference to Figs. 6 and 7. In the first and second embodiments, like reference numerals denote like parts, and thus duplicated description will not be repeated.

As shown in Fig. 6, a pressure plate 77 is disposed at the right side of a main shaft 33. The pressure plate 77 has a substantially disc-like shape. A sub clutch 100 which will be described later is provided at a central side of the pressure plate 77. An outer end of a radial direction of the pressure plate 77 is engaged with an arm 46d. Therefore, the pressure plate 77 is unable to rotate with respect to the clutch housing 46 and rotates together with the clutch housing 46.

A pressing portion 77b which protrudes toward the plate group 66 is formed on an outer portion of the pressure plate 77 in radial direction. The pressing portion 77b is opposite to the friction plate 64, which is the rightmost one in the plate group 66. As the pressure plate 77 moves left, the pressing portion 77b presses the plate group 66 to the left. As a result, the friction plate 64 of the plate group 66 and the clutch plate 65 are pressed into contact with each other.

In addition, the pressure plate 77 has a slide arm 77c which protrudes toward a side opposite to a plate group 66 side, where the slide arm 77c is positioned radially inside of a position where the pressing portion 77b is formed. A friction plate 101 of a power assisting mechanism 200 is slidably engaged with the slide arm 77c in an axial direction of the main shaft 33.

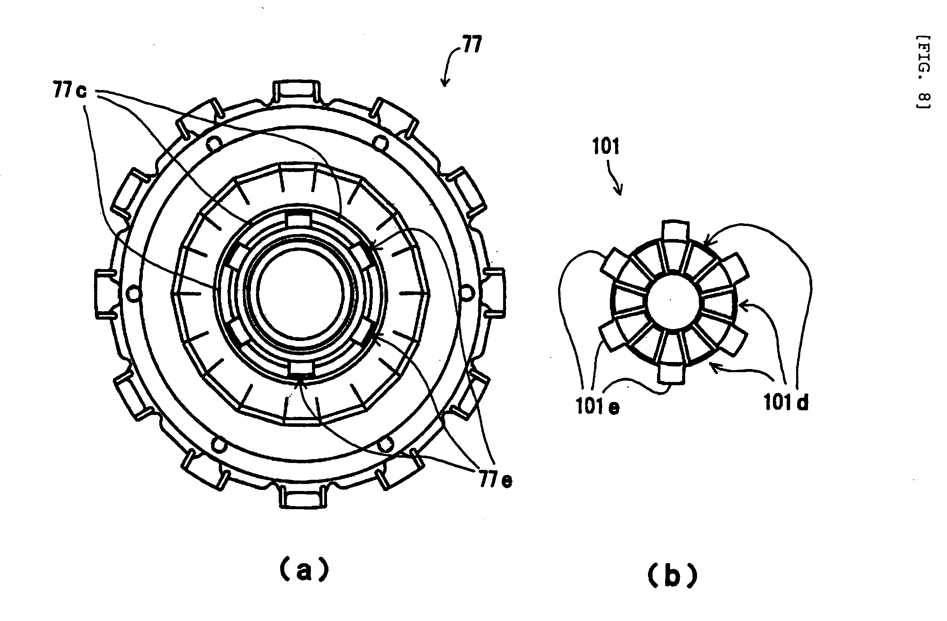

As shown in Fig. 8(a), the pressure plate 77 includes a plurality of slide arms 77c. A groove 77e is formed between the respective slide arms 77c. A plurality of slide arms 77c are provided at regular intervals in a circumferential direction and each of them has the same width. Therefore, a plurality of grooves 77e are also formed at regular intervals in a circumferential direction. However, the plurality of slide arms 77c may have different widths from each other in a circumferential direction.

As shown in Fig. 8(b), the friction plate 101 includes a plurality of stoppers 101e. A plurality of stoppers 101 e radially extend outside the friction plate 101 and are provided at regular intervals in a circumferential direction. In addition, a plurality of stoppers 101 e have a same width with each other in a circumferential direction. In addition, a groove 101d is formed between the respective stoppers 101e. However, the plurality of stoppers 101 e may have different widths from each other in a circumferential direction.

Each stopper 101e is fitted into each groove 77e of the pressure plate 77. At this time, the friction plate 101 is slidable with respect to the pressure plate 77. The friction plate 101 slides with respect to the pressure plate 77 in a direction which extends in an orthogonal direction with respect to Fig. 8.

The pressure plate 77 extends straight between a pressing portion 77b and the slide arm 77c in a longitudinal section. That is, the pressure plate 77 does not have a bent or curved portion between the pressing portion 77b and the slide arm 77c. Therefore, the pressure plate 77 has a simple shape at least between the pressing portion 77b and the slide arm 77c. The structure of the clutch 2 is thereby further simplified. In addition, since the pressure plate 77 does not have a bent or curved portion between the pressing portion 77b and the slide arm 77c in a longitudinal section, the pressure plate 77 does not have an unnecessary size in an axial direction. Therefore, it is possible to make the clutch 2 compact in an axial direction.

Here, the longitudinal section is a cross section by a plane containing a rotational center of the pressure plate 77.

A disc spring 83 is provided at a right side of the pressure plate 77. That is, the disc spring 83 is disposed at an opposite side of the plate group with reference to the pressure plate 77 in an axial direction of the main shaft 33. Here, the pressure plate 77 includes a retainer portion 77d at a portion which is situated on a radially inner side of a position where the pressing portion 77b is formed and at a portion which is situated on a radially outer side of a position where the slide arm 77c is formed. The retainer portion 77d protrudes toward a side at which the disc spring 83 is disposed. That is, the retainer portion 77d protrudes toward a side opposite to the plate group 66 with reference to the pressure plate 77 in an axial direction of the main shaft 33.

The disc spring 83 is formed in a substantially disc-like shape. One end in a radial direction of the disc spring 83 is supported by the retainer portion 77d, and the other end in a radial direction thereof is supported by the arm 46d of the clutch housing 46.

The clutch 2 according to the present embodiment includes a power assisting mechanism 220. The power assisting mechanism 220 converts part of torque of the pressure plate 77 into force for disengaging the clutch 2 and decreases force necessary for disengaging the clutch 2. The power assisting mechanism 220 according to the present embodiment is configured by a so-called ball cam. The power assisting mechanism 220 includes at least a slide shaft 211 fixed to the second pressing plate 103, a first cam plate 222, a second cam plate 223, and a plurality of balls 224.

The power assisting mechanism 220 has three balls 224. The three balls 224 are disposed between the first cam plate 222 and the second cam plate 223 which are opposite to each other so that they can roll freely between the first cam plate 222 and the second cam plate 223. The three balls 224 are disposed at regular intervals along a circumferential direction around an axial center of the slide shaft 211. Here, the number of balls 224 provided in the power assisting mechanism 220 is not limited to three. The ball 224 can move along an imaginary line (=dashed-dotted line) shown in Fig. 7 as described later.

The first cam plate 222 and the second cam plate 223 have a substantially disc-like shape. As shown in Fig. 7(c), a through hole 222b is formed at a center of the first cam plate 222. As shown in Fig. 6, the slide shaft 211 is inserted through the through hole 222b. The slide shaft 211 can move freely in an axial direction and rotate freely with respect to the first cam plate 222. That is, the first cam plate 222 is configured not to rotate even though the slide shaft 211 rotates. In addition, the first cam plate 222 is configured not to move even though the slide shaft 211 moves in an axial direction.

As shown in Fig. 7(a), a serration hole 223b is formed at a center of the second cam plate 223. The second cam plate 223 is serration-fitted into the slide shaft 211. Therefore, the second cam plate 223 can move freely in an axial direction with respect to the slide shaft 211 but is configured to rotate together with the slide shaft 211.

The first cam plate 222 is latched onto a plurality of fastening members 210 fixed to the crankcase 31. Therefore, the first cam plate 222 is fixed with respect to the crankcase 31. In Fig. 6, two fastening members 210 are shown. The number of the fastening members 210 is not particularly limited as long as the number is two or more.

A stopper 225 is provided at an end side of the slide shaft 211. The second cam plate 223 is fixed to the slide shaft 211 by the stopper 225. That is, the second cam plate 223 and the slide shaft 211 rotate integrally and moves integrally in an axial direction.

A first cam face 222a is formed on a right surface (a front surface in Fig. 7(c)) of the first cam plate 222. A ball receiving groove 222c is formed at one end of the second cam groove 222a. A second cam face 223a is formed on a left surface (a front surface in Fig. 7(a)) of the second cam plate 223. A ball receiving groove 223c is formed at one end of the first cam groove 223a. The ball receiving grooves 222c and the ball receiving groove 223c are deeper (left-right width in Fig. 6) than other portions of the first cam groove 222a and the second cam groove 223a, respectively. The other portion which is shallower (left-right width in Fig. 6) than the ball receiving groove 222c is shown as a ball moving groove 222d in Fig. 7(c). The other portion which is shallower (left-right width in Fig. 6) than the ball receiving groove 223c is shown as a ball moving groove 223d in Fig. 9(a).

The first cam groove 222a and the second cam groove 223a are formed so that when the second cam plate 223 rotates in a predetermined direction, the ball 224 moves up onto the ball moving groove 222d and the ball moving groove 223d from the ball receiving groove 222c and the ball receiving groove 223c, whereas when the second cam plate 223 rotates in an direction opposite to the predetermined direction, the ball 224 is received between the ball receiving groove 222c and the ball receiving groove 223c. In other words, both cam grooves 222a and 223a are formed so that both plates 222 and 223 are pressed to be separated from each other and the second cam plate 223 moves to the right when the second cam plate 223 rotates in a predetermined direction. In addition, both cam grooves 222a and 223a are formed so that the urging force of the disc spring 83 moves the second cam plate 223 to the left when the second cam plate 223 rotates in a reverse direction.

Next, an operation of the clutch 2 will be described. An operation for disengaging the clutch 2 will be first described.

If a rider of the motorcycle 1 grips the clutch lever 24 (see Fig. 1), internal pressure of the operating chamber 92 of the driving mechanism 87 is increased. The piston 91 thereby moves to the right, and the long push rod 43b also moves to the right. Then the ball 43c and the short push rod 43a also move to the right, and the first pressing plate 102 of the sub clutch 100 moves to the right. Thereby, the friction plate 101 of the sub clutch 100 is interposed between the first pressing plate 102 and the second pressing plate 103, so that the sub clutch 100 enters an engaged state. As a result, the slide shaft 211 of the power assisting mechanism 220 rotates together with the pressure plate 77 in a predetermined direction.

If the slide shaft 211 rotates in a predetermined direction, the second cam plate 223 of the power assisting mechanism 220 rotates in the same direction. Then the three balls 224 moves up from the ball receiving groove 222c and the ball receiving groove 223c to the ball moving groove 222d and the ball moving groove 223d, and the second cam plate 223 is pressed to the right by the balls 224. Thereby, the slide shaft 211 is also pressed to the right. As a result, the pressure plate 77 moves to the right due to force that the short push rod 43a pushes the pressure plate 77 to the right through the first pressing plate 102 and the friction plate 101 and force that the slide shaft 201 pulls the pressure plate 77 to the right through the second pressing plate 103 and the bearing 104. Accordingly, a pressed-contact state of the plate group 66 is released, so that the clutch 2 is disengaged.

Next, an operation for engaging the clutch 2 will be described.

In order to engage the clutch 2, a rider releases the clutch lever 24 he or she grips. Then an internal pressure of the operating chamber 92 of the driving mechanism 87 is decreased. Thereby, the piston 91 and the long push rod 43b move to the left. Then the ball 43c and the short push rod 43a also move to the left, and the first pressing plate 102 of the sub clutch 100 moves to the left. The first pressing plate 102 of the sub clutch 100 is thereby separated from the friction plate 101. In addition, the second pressing plate 103 is hard to be pushed to the right from the first pressing plate 102. Therefore, a rightward pressing force with respect to the slide shaft 211 disappears.

If a rider releases the clutch lever 24 he or she grips, the pressure plate 77 moves to the left by urging force of the disc spring 83. Here, the second pressing plate 103 and the pressure plate 77 are configured to move integrally in an axial direction. Therefore, as the pressure plate 77 moves to the left, the second pressing plate 103 moves to the left. In addition, as described above, the slide shaft 211 is fixed to the second pressing plate 103. Therefore, as the second pressing plate 103 moves to the left, the slide shaft 211 moves to the left together with the second pressing plate 103.

When the second cam plate 223 and the slide shaft 211 move to the left, the second cam plate 223 rotates in a reverse direction of the predetermined direction. At this time, the plurality of balls 224 are about to be received between the ball receiving groove 222c and the ball receiving groove 223c from the ball moving groove 222d and the ball moving groove 223d.

If the pressure plate 77 moves to the left with urging force of the disc spring 83, the pressure plate 77 presses the plate group 66 into contact with each other, so that the clutch 2 is engaged. At this time, the friction plate 101 of the sub clutch 100 is separated from the second pressing plate 103.

As described above, the clutch 2 according to the first and second embodiments includes the clutch housing 46, the clutch boss 48, the main shaft 33, the pressure plate 77, the power assisting mechanism, the friction plate 101, the first pressing plate 102, the second pressing plate 103, the short push rod 43a, and the clutch lever 24. Here, the power assisting mechanism represents either of the power assisting mechanism 200 or the power assisting mechanism 220.

The clutch housing 46 has the friction plate 64 and rotates by means of rotation of the crankshaft 32 of the engine 4. The clutch boss 48 has the clutch plate 65 which is opposite to the friction plate 64 in an axial direction of the clutch housing 46 and is rotatable upon receiving rotation of the clutch housing 46. The main shaft 33 is supported or connected to the clutch boss 48 and rotates together with the clutch boss 48. The pressure plate 77 is engaged to the clutch housing 46, is movable in axial direction with respect to the clutch housing 46 and is rotatable together with the clutch housing 46. The pressure plate 77 moves to the left to contact the friction plate 64 and the clutch plate 65 with each other. The power assisting mechanism receives torque of the pressure plate 77 and converts the torque into force that moves the pressure plate 77 in a direction in which the friction plate 64 and the clutch plate 65 are separated from each other when the clutch 2 is disengaged. The friction plate 101 is provided to rotate together with the pressure plate 77 and has the first friction surface 101 a formed at a left side and a second friction surface 101 b formed at a right side. The first pressing plate 102 comes into contact with the first friction surface 101a and presses the friction plate 101 from left to right when the clutch 2 is disengaged. The second pressing plate 103 is opposite to the second friction surface 101 b of the friction plate 101, and is pressed into contact with the friction plate 101 pressed by the first pressing plate 102 to receive torque from the pressure plate 77 and transmits the torque to the power assisting mechanism when the clutch 2 is disengaged. The short push rod 43a moves the first pressing plate 102 from left to right when the clutch 2 is disengaged. The clutch lever 24 operates the short push rod 43a to move the first pressing plate 102 from left to right when the clutch 2 is disengaged.

In the clutch 2 according to the first and second embodiments, the friction plate 101 is provided to rotate together with the pressure plate 77. The pressure plate 77 is engaged to the clutch housing 46, is movable in an axial direction with respect to the clutch housing 46, and is rotatable together with the clutch housing 46. The clutch housing 46 rotates by means of rotation of the crankshaft 32 of the engine 4. Therefore, the clutch 2 according to the first and second embodiments transmits rotation of the crankshaft 32 of the engine 4 to the friction plate 101 only through the clutch housing 46 and the pressure plate 77. That is, by using the clutch 2, a shape between the pressure plate 77 and the friction plate 101 can be simplified in constituting a transmission path between the pressure plate 77 and the sub clutch 100. Therefore, according to the first and second embodiments, a friction clutch that can simplify the structure thereof and reduce an operational load necessary for disengaging the clutch can be provided.

The slide arm 77c is formed in the pressure plate 77. In the second embodiment, as shown in Fig. 6, the slide arm 77c protrudes toward the plate group 66. That is, the slide arm 77c does not protrude rightward. Therefore, a protruding portion of the slide arm 77c does not enlarge the width of the clutch 2. The friction plate 101 is slidably engaged with the slide arm 77c. The friction plate 101 can thereby rotate together with the pressure plate 77.

As described above, the present teaching is useful for the friction clutch and the vehicle having the same.

The description above discloses (among others) an embodiment of a friction clutch, comprising: a drive side rotator which has a first plate and rotates by means of rotation of a crankshaft of an engine; a driven side rotator which has a second plate opposite to the first plate in a predetermined direction and is rotatable upon receiving rotation of the drive side rotator; a pressure plate which is engaged to the drive side rotator, is movable in an axial direction with respect to the drive side rotator, and is rotatable together with the drive side rotator, and moves in a predetermined direction to contact the first plate and the second plate with each other; an elastic member for urging the pressure plate in the predetermined direction; a power assisting mechanism which receives torque of the pressure plate and converts the torque into force for moving the pressure plate in a direction for separating the first plate and the second plate from each other when the pressure plate moves in a direction opposite to the predetermined direction; a sub clutch including: a friction plate which is provided to rotate together with the pressure plate and has a first friction surface formed at one side in connection with an axial direction of the drive side rotator and a second friction surface provided at the other side; a pressing member which comes into contact with the first friction surface to press the friction plate from the one side toward the other side when the pressure plate moves in a direction opposite to the predetermined direction; and a torque transmission member which is opposite to the second friction surface of the friction plate and is pressed into contact with the friction plate pressed by the pressing member to receive torque of the pressure plate and transmit the torque to the power assisting mechanism when a clutch is disengaged; a operating shaft which moves the pressing member from one side to the other side; and a clutch operator which operates the operating shaft to move the pressing member from one side to the other side.

Preferably, a slide arm is formed in the pressure plate, and the friction plate is slidably engaged with the slide arm portion.

Further, preferably a rotation shaft is supported or connected to the driven side rotator and rotates together with the driven side rotator, wherein a hole extending in an axial direction is formed in the rotation shaft, the operating shaft is at least partially inserted into the hole of the rotation shaft, and an oil supplying path supplies oil to the sub clutch is formed inside the operating shaft.

Further, preferably the power assisting mechanism is a ball cam.

Further, preferably the drive side rotator includes a plurality of first plates, the driven side rotator includes a plurality of second plates, and the plurality of first plates and the plurality of second plates are alternately disposed in the predetermined direction.

Further, preferably a vehicle comprises a friction clutch according to one of the preferred embodiments.

In order to reduce not only an operational load necessary for disengaging a clutch but also a shock occurring when a clutch is engaged in an idling state in a friction clutch for a motorcycle and the like, an embodiment of a clutch 2 includes a clutch housing 46 having a friction plate 64, a clutch boss 48 having a clutch plate 65, a pressure plate 77, a sub clutch 100, and a power-assisting mechanism 200. The power-assisting mechanism 200 receives torque of the pressure plate 77 when a clutch is disengaged and converts the torque into force for moving the pressure plate in a direction which separates the pressure plate 77 from a plate group 66. A cam face 81 which supports and guides a roller weight 41 is formed in the pressure plate 77. The roller weight 41 moves outward in a radial direction by the movement amount according to the magnitude of centrifugal force and presses the pressure plate 77 toward the plate group 66 with force according to the movement amount.

## Claims

1. Vehicle, in particular straddle-type vehicle such as a motorcycle, comprising an engine (4) with a crankshaft (32) and a friction clutch (2), comprising:
a drive side rotator (46) having a first plate (64) and being rotatable by means of rotation of the crankshaft (32) of the engine (4);
a driven side rotator (48) having a second plate (65) opposite to the first plate (64) in a predetermined direction and being rotatable upon receiving rotation of the drive side rotator (46);
a pressure plate (77) which is engaged to the drive side rotator (46), is movable in an axial direction with respect to the drive side rotator (46), is rotatable together with the drive side rotator (46), and is movable in a predetermined direction to contact the first plate (64) and the second plate (65) with each other;
a power assisting mechanism (200,220) configured to receive torque of the pressure plate (77) and to convert the torque into force for moving the pressure plate (77) in a direction for separating the first plate (64) and the second plate (65) from each other when the pressure plate (77) moves in a direction opposite to the predetermined direction; and
a sub clutch (100) having a friction plate (101) which is rotatable together with the pressure plate (77), the sub clutch (100) being configured to receive torque of the pressure plate (77) and to transmit the torque to the power assisting mechanism (200,220) when the friction clutch (2) is disengaged.

2. Vehicle according to claim 1, wherein rotation of the crankshaft (32) of the engine (4) is transmittable to the friction plate (101) only through the drive side rotator (46) and the pressure plate (77).

3. Vehicle according to claim 1 or 2, wherein the sub clutch (100) is arranged in axial direction of a rotation shaft (33) of the friction clutch (2) between the driven side rotator (48) and the power assisting mechanism (200,220).

4. Vehicle according to one of claims 1 to 3, wherein an elastic member (83) is configured to urge the pressure plate (77) in the predetermined direction.

5. Vehicle according to one of claims 1 to 4, wherein the friction plate (101) of the sub clutch (100) has a first friction surface (101a) formed at one side in axial direction of the drive side rotator (46) and a second friction surface (101b) provided at the other side.

6. Vehicle according to claim 5, wherein a pressing member (102) is configured to come into contact with the first friction surface (101a) to press the friction plate (101) from the one side toward the other side when the pressure plate (77) moves in a direction opposite to the predetermined direction, and/or a torque transmission member (103) is located opposite to the second friction surface (101b) of the friction plate (101) and is configured to be pressed into contact with the friction plate (101) pressed by the pressing member (102) to receive torque of the pressure plate (77) and to transmit the torque to the power assisting mechanism (200,220) when a friction clutch (2) is disengaged.

7. Vehicle according to claim 6, wherein an operating shaft (43a) is configured to move the pressing member (102) from one side to the other side, and, preferably, a clutch operating mechanism (86) is configured to operate the operating shaft (43a) to move the pressing member (102) from one side to the other side.

8. Vehicle according to one of claims 1 to 7, wherein a slide arm (77c) is formed in the pressure plate (77), and, preferably, the friction plate (101) is slideably engaged with a portion of the slide arm (77c).

9. Vehicle according to one of claims 3 to 8, wherein the rotation shaft (33) is supported or connected to the driven side rotator (48) and is rotatable together with the driven side rotator (48).

10. Vehicle according to one of claims 3 to 9, wherein a hole (33a) extending in axial direction is formed in the rotation shaft (33), the operating shaft (43a) being preferably at least partially inserted into the hole (33a) of the rotation shaft (33), and, preferably, an oil supplying path (110) configured to supply oil to the sub clutch (100) is formed inside the operating shaft (43a).

11. Vehicle according to one of claims 1 to 10, wherein the power assisting mechanism (200,220) comprises a ball cam.

12. Vehicle according to one of claims 1 to 11, wherein the drive side rotator (46) includes a plurality of first plates (64), the driven side rotator (48) includes a plurality of second plates (65), and the plurality of first plates (64) and the plurality of second plates (65) are alternately disposed in the predetermined direction.

13. Vehicle according to one of claims 1 to 12, wherein the friction clutch (2) comprises a centrifugal clutch configured to engage and disengage according to a rotation speed of the engine (4).

## Patentansprüche

1. Fahrzeug insbesondere Fahrzeug vom Spreizsitztyp wie ein Motorrad, umfassend einen Motor (4) mit einer Kurbelwelle (32) und einer Reibkupplung (2), das umfasst:
einer Antriebsseite-Dreheinrichtung (46), die eine erste Platte (64) hat und drehbar durch die Drehung der Kurbelwelle (32) des Motors (4) ist;
einer Getriebenenseite-Dreheinrichtung (48), die eine zweite Platte (65) hat gegenüberliegend zu der ersten Platte (64) in einer vorgegebenen Richtung und die drehbar auf Grund der empfangenen Drehung der Antriebsseite-Dreheinrichtung (46) ist;
eine Druckplatte (77), die in Eingriff mit der Antriebsseite-Dreheinrichtung (46) ist, ist bewegbar in axialer Richtung mit Bezug auf die Antriebsseiten-Dreheinrichtung (46), ist drehbar zusammen mit der Antriebsseite-Dreheinrichtung (46), und ist bewegbar in eine vorgegebene Richtung um die erste Platte (64) und die zweite Platte (65) miteinander in Kontakt zu bringen;
ein Leistungs-Unterstützungsmechanismus (200, 220), konfiguriert um Moment von der Druckplatte (77) aufzunehmen und das Moment in eine Kraft zur Bewegung der Druckplatte (77) in eine Richtung zum Trennen der ersten Platte (64) und der zweiten Platte (65) voneinander zu überführen, wenn die Druckplatte (77) sich in eine Richtung gegenüberliegend zu der vorgegebenen Richtung bewegt; und
eine Unterkupplung (100), die eine Reibplatte (101) hat, die drehbar zusammen mit der Druckplatte (77) ist, die Unterkupplung (100) ist konfiguriert um Moment von der Druckplatte (77) aufzunehmen und das Moment zu dem Leistungs-Unterstützungsmechanismus (200, 220) zu übertragen, wenn die Reibkupplung (2) außer Eingriff ist.

2. Fahrzeug gemäß Anspruch 1, wobei Drehung der Kurbelwelle (32) des Motors (4) zu der Druckplatte (101) nur durch die Antriebsseite-Dreheinrichtung (64) und die Druckplatte (77) übertragen wird.

3. Fahrzeug gemäß Anspruch 1 oder 2, wobei die Unterkupplung (100) in einer axialen Richtung einer Drehwelle (33) der Reibkupplung (2) zwischen den Getriebenenseite-Dreheinrichtung (48) und dem Leistungs-Unterstützungsmechanismus (200, 220) angeordnet ist.

4. Fahrzeug gemäß einem der Ansprüche 1 bis 3, wobei ein elastisches Element (83) konfiguriert ist, um die Druckplatte (77) in die vorgegebene Richtung zu drücken.

5. Fahrzeug gemäß einem der Ansprüche 1 bis 4, wobei die Druckplatte (101) der Unterkupplung (100) eine erste Reibfläche (101a), ausgebildet an einer Seite in axialer Richtung der Antriebsseite-Dreheinrichtung (46) und eine zweite Reibfläche (111 b), vorgesehen an der anderen Seite, hat.

6. Fahrzeug gemäß Anspruch 5, wobei ein Druckelement (102) konfiguriert ist, um in Kontakt mit der ersten Reibfläche (101a) zu kommen, um die Reibplatte (101) von der einen Seite zu der anderen Seite zu pressen, wenn die Druckplatte (77) in eine Richtung gegenüberliegend zu der vorgegebenen Richtung bewegt wird und/oder ein Moment-Übertragungselement (103) ist gegenüberliegend zu der zweiten Reibfläche (111b) der Reibplatte (101) angeordnet und ist konfiguriert, um in Kontakt mit der Reibplatte (101) die durch das Presselement (102) gepresst zu werden, um Moment von der Reibplatte (77) aufzunehmen und das Moment zu dem Leistungs-Unterstützungsmechanismus (200, 220) zu übertragen, wenn die Reibkupplung (2) außer Eingriff ist.

7. Fahrzeug gemäß Anspruch 6, wobei eine Betriebswelle (43a) konfiguriert ist, um das Druckelement (102) von der einen Seite zu der anderen Seite zu bewegen, und vorzugsweise ist ein Kupplungsbetriebsmechanismus (86) konfiguriert, um die Betriebswelle (43a) zu betreiben und das Druckelement (102) von der einen Seite zu der anderen Seite zu bewegen.

8. Fahrzeug gemäß einem der Ansprüche 1 bis 7, wobei ein Gleitarm (77c) in der Druckplatte (77) ausgebildet ist, und vorzugsweise die Reibplatte (101) gleitbar in Eingriff mit einem Abschnitt des Gleitarms (77c) ist.

9. Fahrzeug gemäß einem der Ansprüche 3 bis 8, wobei die Drehwelle (33) gelagert oder verbunden ist mit der Antriebsseiten-Dreheinrichtung (48) und zusammen mit der Getriebenenseite-Dreheinrichtung (48) drehbar ist.

10. Fahrzeug gemäß einem der Ansprüche 3 bis 9, wobei ein Loch (33a), das sich in axialer Richtung erstreckt, in der Drehwelle (33) ausgebildet ist, die Betriebswelle (43a) ist vorzugsweise zumindest teilweise in das Loch (33a) der Drehwelle (33) eingesetzt, und vorzugsweise ist ein ÖI-Zufuhrpfad (101), konfiguriert um ÖI zu der Unterkupplung (100) zuzuführen, in der Betriebswelle (43a) ausgebildet.

11. Fahrzeug gemäß einem der Ansprüche 1 bis 10, wobei der Leistungs-Unterstützungsmechanismus (200, 220) eine Kugel-Nocke umfasst.

12. Fahrzeug gemäß einem der Ansprüche 1 bis 11, wobei die Antriebsseite-Dreheinrichtung (46) eine Mehrzahl von ersten Platten (64) beinhaltet, die Getriebenenseite-Dreheinrichtung (48) eine Mehrzahl von zweiten Platten (65) beinhaltet, und die Mehrzahl von ersten Platten (64) und die Mehrzahl von zweiten Platten (65) abwechselnd in der vorgegebenen Richtung sind.

13. Fahrzeug gemäß einem der Ansprüche 1 bis 12, wobei die Reibkupplung (2) eine Zentrifugalkupplung umfasst, die zum In-Eingriff und Außer-Eingriff gemäß einer Drehgeschwindigkeit des Motors (4) konfiguriert ist.

## Revendications

1. Véhicule, en particulier un véhicule de type monté à califourchon tel qu'une motocyclette, comprenant un moteur (4) avec un vilebrequin (32) et un embrayage à friction (2), comprenant :
- un élément rotatif côté entrainement (46) comportant un premier plateau (64) et susceptible d'être entrainé en rotation au moyen d'une rotation du vilebrequin (32) du moteur (4) ;
- un élément rotatif côté entrainé (48) comportant un second plateau (65) opposé au premier plateau (64) dans une direction prédéterminée et susceptible d'être entrainé en rotation lors de l'application d'une rotation de l'élément rotatif côté entrainement (46) ;
- un plateau de pression (77), au contact de l'élément rotatif côté entrainement (46), est mobile dans une direction axiale par rapport à l'élément rotatif côté entrainement (46), est susceptible d'être entrainé en rotation avec l'élément rotatif côté entrainement (46) et est mobile dans une direction prédéterminée pour faire venir en contact le premier plateau (64) et le second plateau (65) l'un avec l'autre ;
- un mécanisme d'assistance de puissance (200, 220) configuré pour recevoir un couple du plateau de pression (77) et convertir ce couple en une force pour déplacer le plateau de pression (77) dans une direction de séparation du premier plateau (64) et du second plateau (65) l'un de l'autre lorsque le plateau de pression (77) se déplace dans une direction opposée à la direction prédéterminée ; et
- un sous-embrayage (100) comportant un plateau de friction (101) susceptible d'être entrainé en rotation avec le plateau de pression (77), le sous-embrayage (100) étant configuré pour recevoir un couple du plateau de pression (77) et transmettre ce couple au mécanisme d'assistance de puissance (200, 220) lorsque l'embrayage à friction (2) est débrayé.

2. Véhicule selon la revendication 1, dans lequel une rotation du vilebrequin (32) du moteur (4) est susceptible d'être transmise au plateau de friction (101) uniquement par l'élément rotatif côté entrainement (46) et le plateau de pression (77).

3. Véhicule selon les revendications 1 ou 2, dans lequel le sous-embrayage (100) est agencé dans une direction axiale d'un arbre de rotation (33) de l'embrayage à friction (2) entre l'élément rotatif côté entrainé (48) et le mécanisme d'assistance de puissance (200, 220).

4. Véhicule selon l'une des revendications 1 à 3, dans lequel un élément élastique (83) est configuré pour solliciter le plateau de pression (77) dans la direction prédéterminée.

5. Véhicule selon l'une des revendications 1 à 4, dans lequel le plateau de friction (101) du sous-embrayage (100) comporte une première surface de friction (101a) formée d'un premier côté dans une direction axiale de l'élément rotatif côté entrainement (46) et une seconde surface de friction (101b) disposée de l'autre côté.

6. Véhicule selon la revendication 5, dans lequel un élément presseur (102) est configuré pour venir au contact de la première surface de friction (101a) afin de presser le plateau de friction (101) depuis le premier côté vers l'autre côté lorsque le plateau de pression (77) se déplace dans une direction opposée à la direction prédéterminée et/ou un élément de transmission de couple (103) est localisé à l'opposé de la seconde surface de friction (101b) du plateau de friction (101) et est configuré pour être pressé au contact du plateau de friction (101) pressé par l'élément presseur (102) afin de recevoir un couple du plateau de pression (77) et de transmettre ce couple au mécanisme d'assistance de puissance (200, 220) lorsqu'un embrayage à friction (2) est débrayé.

7. Véhicule selon la revendication 5, dans lequel un arbre d'actionnement (43a) est configuré pour déplacer l'élément presseur (102) d'un côté à l'autre côté et, de préférence, un mécanisme d'actionnement d'embrayage (86) est configuré pour actionner l'arbre d'actionnement (43a) afin de déplacer l'élément presseur (102) d'un côté à l'autre côté.

8. Véhicule selon l'une des revendications 1 à 7, dans lequel un bras de coulissement (77c) est formé dans le plateau de pression (77) et, de préférence, le plateau de friction (101) est en contact de coulissement avec une partie du bras de coulissement (77c).

9. Véhicule selon l'une des revendications 3 à 8, dans lequel l'arbre de rotation (33) est supporté ou connecté à l'élément rotatif côté entrainé (48) et est susceptible d'être entrainé en rotation avec l'élément rotatif côté entrainé (48).

10. Véhicule selon l'une des revendications 3 à 9, dans lequel un trou (33a) s'étendant dans une direction axiale est ménagé dans l'arbre de rotation (33), l'arbre d'actionnement (43a) étant de préférence au moins partiellement inséré dans le trou (33a) de l'arbre de rotation (33) et, de préférence, un chemin d'alimentation en huile (110) configuré pour alimenter en huile le sous-embrayage (100) est formé à l'intérieur de l'arbre d'actionnement (43a).

11. Véhicule selon l'une des revendications 1 à 10, dans lequel le mécanisme d'assistance de puissance (200, 220) comprend une came à bille.

12. Véhicule selon l'une des revendications 1 à 11, dans lequel l'élément rotatif côté entrainement (46) comprend une pluralité de premiers plateaux (64), l'élément rotatif côté entrainé (48) comprend une pluralité de seconds plateaux (65) et la pluralité de premiers plateaux (64) et la pluralité de seconds plateaux (65) sont disposées en alternance dans la direction prédéterminée.

13. Véhicule selon l'une des revendications 1 à 12, dans lequel l'embrayage à friction (2) constitue un embrayage centrifuge configuré pour embrayer et débrayer suivant une vitesse de rotation du moteur (4).
